# EUROPEAN PATENT SPECIFICATION

(11) **EP 4 438 000 B1**
(45) Date of publication and mention of the grant of the patent: **03.06.2026**
(21) Application number: 24166381.4
(22) Date of filing: 26.03.2024
(51) Int. Cl.: B24D 18/00

(54) **DENTAL POLISHING INSTRUMENT**
ZAHNÄRZTLICHES POLIERINSTRUMENT
INSTRUMENT DE POLISSAGE DENTAIRE

(30) Priority: 29.03.2023 JP 2023052705; 19.12.2023 JP 2023213786
(43) Date of publication of application: 02.10.2024
(73) Proprietor: Kabushiki Kaisha Shofu, Kyoto-shi Kyoto 605-0983 (JP)
(72) Inventor: YUMIYAMA, Naoki, Kyoto, 605-0983 (JP); TORITA, Yasuhiro, Kyoto, 605-0983 (JP); ISHIDA, Sayaka, Kyoto, 605-0983 (JP)
(74) Representative: Eisenführ Speiser

(56) References cited:
- CN-A- 102 658 528
- JP-B1- S 515 238
- US-A- 4 830 615

## Description

### BACKGROUND

### 1. Technical Field

The present invention relates to a dental polishing instrument for polishing dental restorations made of a material, such as a ceramic, a metal, a composite resin, or a resin.

### 2. Description of the Related Art

In general dental treatment practices, when a tooth has a disease such as caries, the dental tissue is removed from the carious part, and the removed part is restored using a dental restoration (such as a dental prosthesis or a dental filler) made of various types of material such as a ceramic, a metal, or a composite resin.

Such a dental restoration requires shaping and occlusal adjustment during its fabrication process, or after the dental restoration is placed in the oral cavity, to adjust the shape in a manner suitable for the biological function of the tooth. However, such shaping and occlusal adjustment roughen the surface of the dental restoration.

If a dental restoration with a rough surface is placed inside the oral cavity, the restoration can neither achieve naturalness equivalent to that of natural teeth, nor present a highly aesthetic appearance. Furthermore, parts with a rough surface may have an adverse effect on teeth, e.g., may become a cause of a stain or plaque deposition. Based on the above, it is very important to polish dental restorations to have a smooth surface.

In many cases, dental restorations are polished by an operator (dental practitioner or dental technician) after the shaping or the occlusal adjustment, by attaching an abrasive to a micromotor, and polishing the dental restoration manually using the abrasive in rotation. In order to adjust the roughness of the surface to an appropriate level, the operator generally polishes a dental restoration by changing the abrasives incrementally, from an abrasive including coarser abrasive grains, to an abrasive having finer abrasive grains. For example, to begin with, a mid-finish abrasive is used to reduce the surface roughness and to achieve a certain degree of fineness. The mid-finish abrasive is then removed from the micromotor, and a final finishing abrasive is attached to the micromotor. The dental restoration is then further polished, to achieve a surface with the intended surface properties. In this manner, during the process of polishing, the operator needs to attach and to detach a plurality of abrasives to and from the micromotor. The operator is thus required to go through this cumbersome and time consuming handling.

When abrasives are used in the dental office, the abrasives become contaminated after the use in the oral cavity. While some abrasives can be reused by removing contaminant such as bacteria through regeneration treatment, disposable products have recently come to be available in the market, due to increased hygiene awareness such as awareness of risks of cross infection. At the same time, disposable abrasives impose a heavy economic burden if a plurality of abrasives are discarded after a single use. Therefore, it is highly expected that in the demand for disposable abrasives capable of polishing with a fewer number of abrasives will increase, from the viewpoint of hygiene and economy.

JP H06-42064 U (Patent Document 1) describes a two-layer cup-shaped grinder. The cup-shaped grinder described in JP H06-42064 U has a structure in which two layers of abrasive grains each of which has a different granularity from that of the other are integrally sintered and attached to a shank portion. This cup-shaped grinder is characterized in enabling the leading side (with coarser grains) of the grinder to grind coarsely in the direction in which grinder is advanced, and enabling the trailing side (with finer grains) of the grinder to grind finely with finer abrasive grains, to achieve a smooth finish surface. However, in the cup grinder described in JP H06-42064 U, the two layers of the grinders for coarser grinding and finer grinding are integrated, and the grinder for coarser grinding cannot be removed from the grinder for finer grinding. Furthermore, the coarser grinding and the finer grinding are controlled based on the direction in which the grinder is advanced. For these reasons, when a small and complicated irregular surface such as an occlusal surface of a molar is to be polished, there is a risk of roughening the polished surface again, by erroneously bringing the coarser grinder into contact with the surface having been finely polished. Hence, with such a grinder, it is difficult to polish a surface highly precisely.

US 4 830 615 A discloses a dental polishing disc formed by a dental instrument comprising whetstone having a coarse abrasive surface and a fine abrasive surface.

### SUMMARY

An object of the present invention is to provide a dental polishing instrument enabling polishing ranging from mid- to final-finish polishing of a dental restoration to be performed with one dental polishing instrument, as well as being capable of improving the efficiency of the polishing.

The dental polishing instrument of the invention is defined in the appended claims.

As a result of intensive studies for overcoming the issues described above, the inventors of the present patent application have come up with the present invention. That is, a dental polishing instrument according to the present invention includes:
a first whetstone layer; and a second whetstone layer,wherein the first whetstone layer and the second whetstone layer are stacked and held together by a physical fitting or an adhesive layer disposed between the first whetstone layer and the second whetstone layer, while the whetstone layers are manually separable from each other, and each of the whetstone layers includes abrasive grains (A) and a binder (B), an average particle diameter of the abrasive grains (A) of the first whetstone layer is larger than an average particle diameter of the abrasive grains (A) of the second whetstone layer.

With the dental polishing instrument according to the present invention, it is possible to carry out polishing ranging from mid- to final-finish polishing with one dental polishing instrument, without detaching and attaching a plurality of abrasives from and to a micromotor or the like. Therefore, the efficiency of the polishing can be improved remarkably.

### BRIEF DESCRIPTION OF DRAWINGS

Fig. 1 is a schematic sectional view illustrating a cross-sectional structure including a rotational axis of a dental polishing instrument according to a first embodiment;
Fig. 2 is a schematic illustrating an enlarged cross-section of the whetstone layers included in the dental polishing instrument illustrated in Fig. 1;
Fig. 3 is a schematic front view of a second whetstone layer with some protrusions, as an example of physical fitting;
Fig. 4A is a schematic front view of the second whetstone layer having a lattice-like pattern, as an example of the physical fitting;
Fig. 4B is a schematic front view of the second whetstone layer having a lattice-like pattern, as an example of the physical fitting;
Fig. 5A is a schematic front view of the second whetstone layer having a slit pattern, as an example of physical fitting;
Fig. 5B is a schematic front view of a second whetstone layer having a slit pattern, as an example of the physical fitting;
Fig. 5C is a schematic front view of the second whetstone layer having a slit pattern, as an example of the physical fitting;
Fig. 6 is a schematic cross-sectional view of a structure including a rotational axis of a dental polishing instrument according to a second embodiment;
Fig. 7A is a schematic perspective view illustrating an example of a dental polishing instrument having a shaft integrated thereto, according to a third embodiment;
Fig. 7B is a schematic perspective view illustrating an example of a dental polishing instrument that is a modification of the dental polishing instrument according to the third embodiment, and enabled to attach and to detach a shaft thereto;
Fig. 8 is a schematic cross-sectional view of a dental polishing instrument with a separation agent layer disposed between the first whetstone layer and the second whetstone layer;
Fig. 9A is a schematic front view illustrating a bullet-shaped dental polishing instrument;
Fig. 9B is a schematic front view illustrating a spindle-shaped dental polishing instrument;
Fig. 9C is a schematic front view illustrating a cup-shaped dental polishing instrument; and
Fig. 10 is Table 1 indicating evaluation results of dental polishing instrument according to Examples 1 to 11.

### DETAILED DESCRIPTION

A dental polishing instrument according to a first aspect includes:
first whetstone layer; and a second whetstone layer,wherein the first whetstone layer and the second whetstone layer are stacked and held together by a physical fitting or an adhesive layer disposed between the first whetstone layer and the second whetstone layer, while the whetstone layers are manually separable from each other, and each of the whetstone layers includes abrasive grains (A) and a binder (B), an average particle diameter of the abrasive grains (A) of the first whetstone layer is larger than an average particle diameter of the abrasive grains (A) of the second whetstone layer.

Further, as a dental polishing instrument of a second aspect, in the first aspect, the binder (B) of at least one whetstone layer of the whetstone layers may include an elastomer material.

Further, as a dental polishing instrument of a third aspect, in the first aspect, the dental polishing instrument may have a rotational axis, and
the whetstone layers may be stacked along an outer circumference from a center of the rotational axis.

Further, as a dental polishing instrument of a fourth aspect, in the third aspect, the abrasive grains (A) of the whetstone layer that is an outer one of the whetstone layers may have a larger average particle diameter than an average particle diameter of the abrasive grains (A) of the whetstone layer that is an inner one of the whetstone layers.

Further, as a dental polishing instrument of a fifth aspect, in the first aspect, two adjacent whetstone layers, among the whetstone layers, may be held together, with a separation agent layer disposed between the two adjacent whetstone layers.

Hereinafter, a dental polishing instrument according to some embodiments will now be explained with reference to the attached drawings. In the drawings, substantially the same members are denoted by the same reference numerals.

### (First Embodiment)

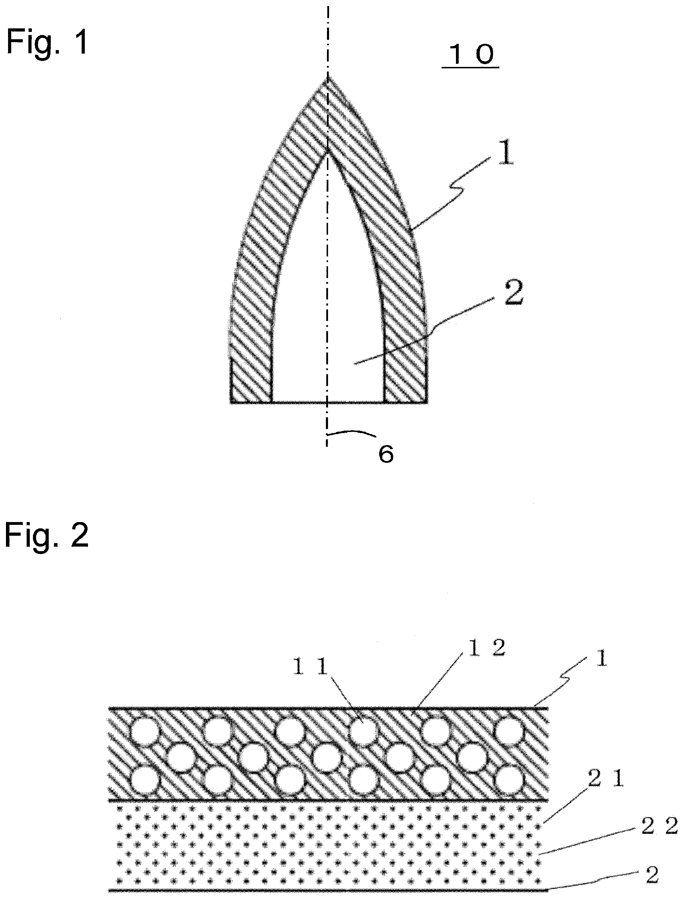

Fig. 1 is a schematic sectional view illustrating a cross-sectional structure including a rotational axis 6 of a dental polishing instrument 10 according to a first embodiment. Fig. 2 is a schematic illustrating an enlarged cross-section of whetstone layers 1, 2 included in the dental polishing instrument illustrated in Fig. 1.

The dental polishing instrument according to the first embodiment includes a first whetstone layer and a second whetstone layer. The first whetstone layer and the second whetstone layer are stacked, and each of the whetstone layers includes abrasive grains (A) and a binder (B), and the whetstone layers are separable from each other.

With this dental polishing instrument, it is possible to separate the whetstone layers sequentially, so as to perform polishing ranging from mid-finish polishing to final-finish polishing using one dental polishing instrument. Therefore, it is possible to improve the efficiency of the polishing, remarkably.

Members included in the dental polishing instrument will now be explained.

### <Whetstone layers>

The dental polishing instrument 10 includes stacked whetstone layers 1, 2. The number, the materials, and the shapes of the whetstone layers may be any number, materials, or shapes. In the dental polishing instrument 10 as an example of the dental polishing instrument having a two-layer structure illustrated in Fig. 1, the first whetstone layer 1 is on the outermost surface of the dental polishing instrument, and mainly functions as a mid-finish polishing material, for example. The second whetstone layer 2 is on the inner side of the first whetstone layer 1, and functions as a final-finish polishing layer. Preferably, the first whetstone layer 1 and the second whetstone layer 2 are in physical contact with each other in such a manner that the first whetstone layer 1 can be removed after the mid-finish polishing with the first whetstone layer 1 is finished. More preferably, the first whetstone layer 1 has flexibility so that the first whetstone layer 1 can be easily removed from the second whetstone layer 2.

As illustrated in Fig. 1, for example, the first whetstone layer 1 covers substantially the entire outer peripheral surface of the second whetstone layer 2, except for the bottom surface. With the first whetstone layer 1, the second whetstone layer 2 for final-finish polishing is not exposed. Therefore, it is possible to suppress the erroneous use of the second whetstone layer 2 at the time of mid-finish polishing, in which the first whetstone layer 1 is used.

Examples of a method of bonding (closely attaching) the whetstone layers 1, 2 to each other includes a method of physically crimping, a method of bonding (closely attaching) the whetstone layers to each other using physical fitting, a method of bonding the grinders to each other by an adhesive or the like, a method of bonding the whetstone layers 1, 2 to each other by a grip force of binders of the adjacent whetstone layers 1, 2, but without limitation thereto. The whetstone layers 1, 2, however, need to be separable.

Using the example of a dental polishing instrument having a two-layer structure, possible alternatives for holding the first whetstone layer and the second whetstone layer together are: using residual compressive stress of hot-press forming or the like, by which the first whetstone layer is formed on the second whetstone layer; using chemical bonding between binders included in the first whetstone layer and the second whetstone layer, respectively; and physically fusing these layers by heating. A characteristic of this dental polishing instrument lies in making the second whetstone layer usable by removing the first whetstone layer after the use of the first whetstone layer. Due to this characteristic, the dental polishing instrument preferably has a configuration in which the whetstone layers are bonded (closely attached) to each other by the grip force of the binders (B) included in the respective adjacent whetstone layers, or a configuration in which the whetstone layers are held together by residual compressive stress.

In addition, as the shape in which the whetstone layers are stacked, the whetstone layers are preferably stacked along the outer circumference from a center of the rotational axis. In such a configuration, preferably, abrasive grains 11 (A) of the whetstone layer 1 that is the outer one of the whetstone layers have a larger average particle diameter than the average particle diameter of the abrasive grains 21 (A) of the whetstone layer 2 that is the inner one of the whetstone layers, as illustrated in Fig. 2. Assuming a dental polishing instrument having a two-layer structure as an example, the first whetstone layer 1 used for mid-finish polishing may be provided on the outermost surface, and the second whetstone layer 2 used for final-finish polishing may be provided on the inner side of the first whetstone layer. In this structure, due to the nature of the first whetstone layer 1 being used in the mid-finish polishing, the first whetstone layer 1 requires higher grindability than the second whetstone layer 2, and therefore, the abrasive grains 11 (A) to be used in the first whetstone layer 1 have larger particle diameters than the particle diameters of the abrasive grains 21 (A) to be used in the second whetstone layer 2. Furthermore, by using abrasive grains 11 (A) having larger particle diameters for the first whetstone layer 1 than those of the abrasive grains 21 (A) used for the second whetstone layer 2, the roughness of the first whetstone layer 1 is increased. Therefore, the grip force of the first whetstone layer is enhanced, in addition to the holding by the residual compressive stress, so that the first whetstone layer becomes less likely to fall off from the second whetstone layer even during the use at high-speed rotation.

Furthermore, in order to further reduce detachment or idling of the whetstone layer due to the high-speed rotation and a high load, it is more preferable to hold the whetstone layer by physical fitting force between the whetstone layers. To enable the layers to be physically caught to each other, slits or grid-like grooves may be formed or irregular shape may be given to the surface of the inner whetstone layer, but the shape, the size, and the like of the physical fitting are not limited, as long as the required catching force can be achieved.

Fig. 1 shows the case of a two-layer whetstone layers, but is not limited to this. For example, the whetstone layers may include three or more whetstone layers.

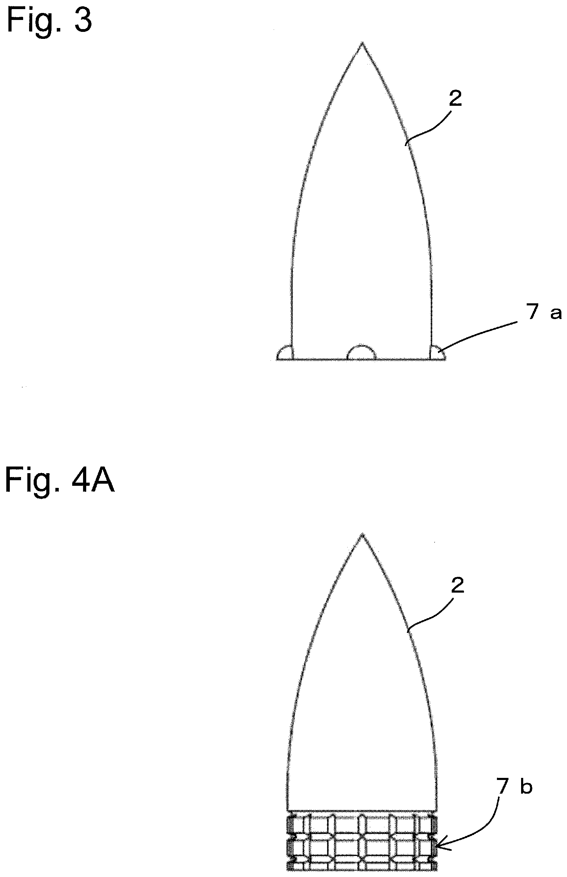

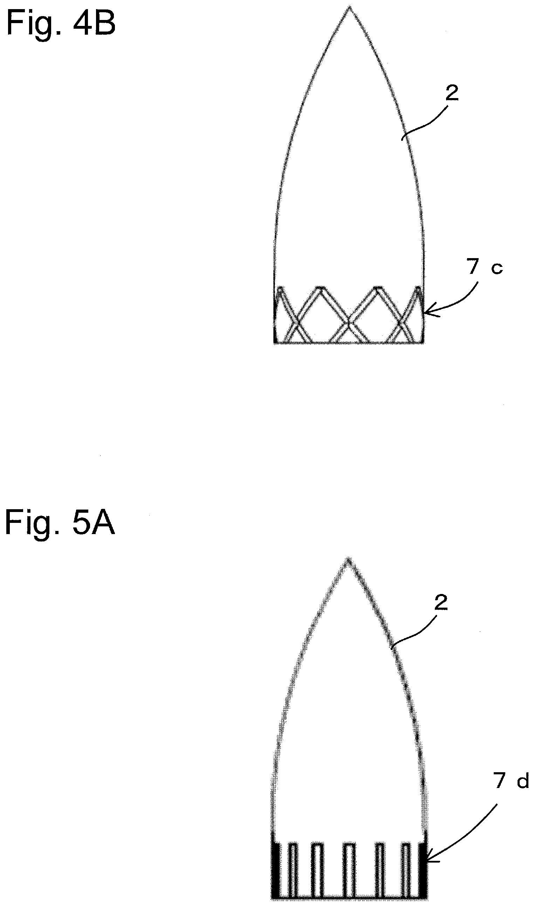

Fig. 3 is a schematic front view of the second whetstone layer 2 with some protrusions 7a, as an example of the physical fitting. Figs. 4A and 4B are schematic front views of the second whetstone layers 2 given the lattice-like patterns 7b and 7c, respectively, as some examples of the physical fitting. Figs. 5A to 5C are schematic front views of the second whetstone layers 2 given slit patterns 7d, 7e, and 7f, respectively, as some examples of physical fitting.

As the physical fitting, as illustrated in Figs. 3, 4A, 4B, and 5A to 5C, the protrusions 7a, the lattice-like patterns 7b, 7c, the slit patterns 7d, 7e, 7f, and the like may be provided on the second whetstone layer 2 that is on the inner circumference. The first whetstone layer 1 and the second whetstone layer 2 may also be held together by screwing. For example, the physical fitting may be achieved by providing a part where the first whetstone layer 1 and the second whetstone layer 2 overlap each other in the direction along the rotational axis 6, and the first whetstone layer 1 may be screwed (not illustrated) onto the second whetstone layer 2 in a direction opposite to the direction of the rotation.

By providing physical fitting between the first whetstone layer 1 and the second whetstone layer 2, the first whetstone layer 1 and the second whetstone layer 2 provided above the physical fitting can be held together by the physical fitting. Such a physical fitting can also suppress idle rotations of the first whetstone layer 1 with respect to the second whetstone layer 2.

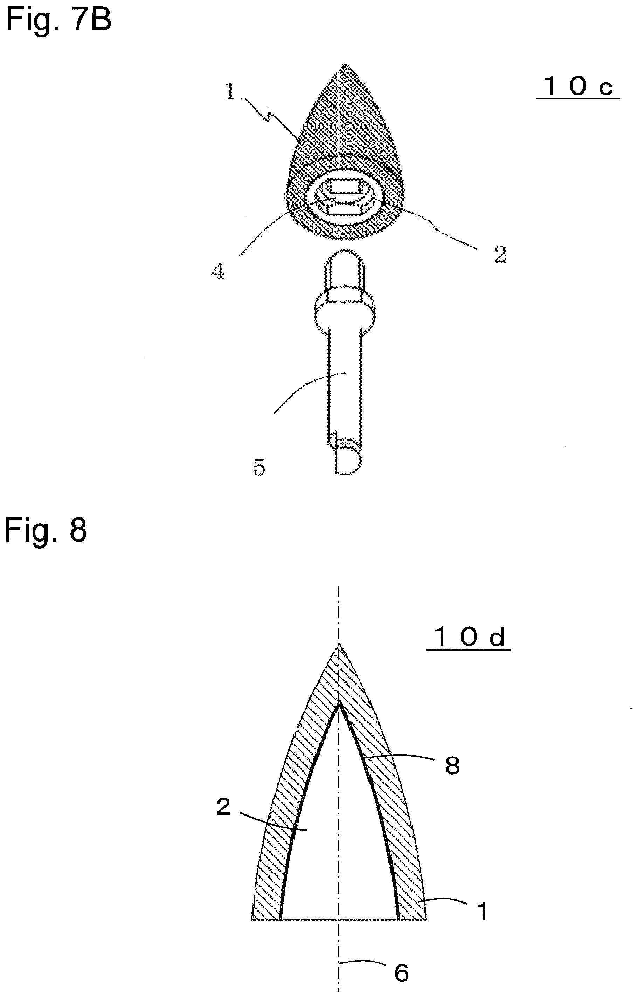

Fig. 8 is a schematic cross-sectional view illustrating a cross-sectional structure of a dental polishing instrument 10d with a separation agent layer 8 provided between the first whetstone layer 1 and the second whetstone layer 2.

Such separation agent may be applied between the first whetstone layer 1 and the second whetstone layer 2 of the dental polishing instrument 10d, for the effect of facilitating the removal of the first whetstone layer 1 from the second whetstone layer 2, after the use of the first whetstone layer 1. The first whetstone layer 1 and the second whetstone layer 2 sometimes become closely attached to each other when the binder in the first whetstone layer 1 and the binder in the second whetstone layer 2 are made of the same material or materials of the same group. In such a case, it is possible to provide a separation agent layer 8 that is a layer of a separation agent between the first whetstone layer 1 and the second whetstone layer 2, and to hold the first whetstone layer 1 and the second whetstone layer 2 together, with the separation agent layer 8 interposed therebetween, as illustrated in Fig. 8, for example.

The separation agent used for the separation agent layer 8 is not limited to a particular agent, but an optimal separation agent may be used in consideration of the compatibility with the material used for the binder. Examples of the separation agent include inorganic powders such as talc, zeolite, bentonite, and calcium carbonate, polymer beads, and zinc stearate.

By contrast, when the first whetstone layer 1 and the second whetstone layer 2 are made of materials of different groups, e.g., one is an elastomer material and the other is a glass material, it is also possible to provide an adhesive layer between the first whetstone layer 1 and the second whetstone layer 2, to hold the first whetstone layer 1 and the second whetstone layer 2 together with the adhesive layer therebetween.

The adhesive used for the adhesive layer is not limited to a particular adhesive, but an optimal adhesive may be used in consideration of the compatibility with the materials used for the binders. Examples of the adhesive include a vinyl acetate-based adhesive, a nitrile rubber-based adhesive, an epoxy resin-based adhesive, and an acrylic resin-based adhesive.

It is also possible to use the physical fitting, the separation agent layer, or the adhesive layer in an appropriate combination, to hold the first whetstone layer 1 and the second whetstone layer 2 together. For example, it is possible to combine a physical fitting and a separation agent layer, or to combine a physical fitting and an adhesive layer. It is also possible to combine a separation agent layer and an adhesive layer. Alternatively, a physical fitting may be combined with a separation agent layer and an adhesive layer.

In addition, the first whetstone layer 1 only needs to be separable from the second whetstone layer 2, without limitation thereto. For example, the first whetstone layer 1 may be provided on the second whetstone layer 2 attachably after the first whetstone layer 1 is removed, so as to make the first whetstone layer 1 reusable.

### <Overall Shape of Dental polishing instrument>

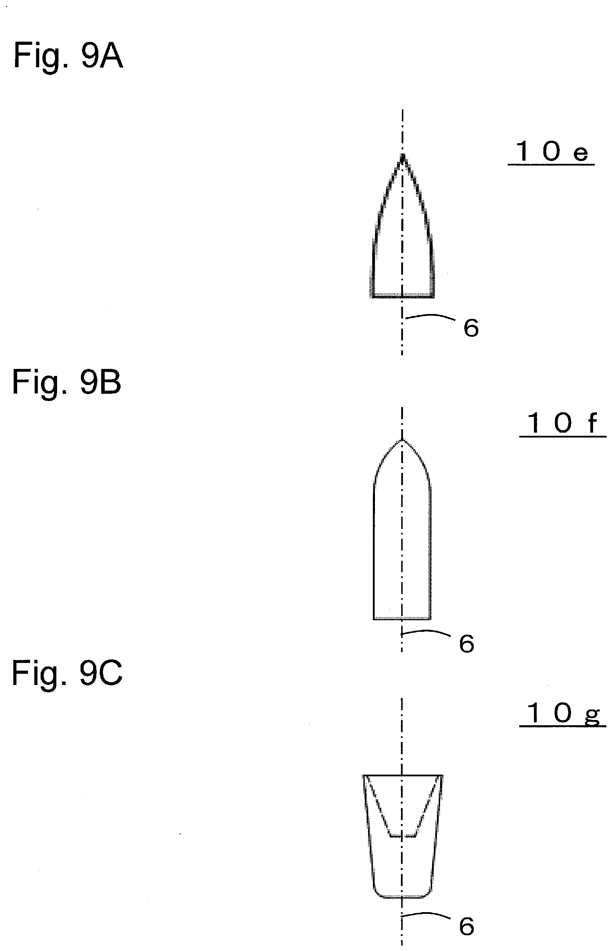

Fig. 9A is a schematic front view illustrating a bullet-shaped dental polishing instrument 10e. Fig. 9B is a schematic front view illustrating a spindle-shaped dental polishing instrument 10f. Fig. 9C is a schematic front view illustrating a cup-shaped dental polishing instrument 10g.

The shape of the dental polishing instruments 10, 10e, 10f, and 10g is not limited to any particular shape, but the dental polishing instruments are generally used by rotating. Therefore, as the overall shape of the dental polishing instrument including stacked whetstone layers, generally, a rotationally symmetric shape with respect to the rotational axis 6 may be used. Examples of the shape include a cylindrical shape, a conical shape, a paraboloid shape, a bullet-like shape (Fig. 1, Fig. 9A), a spindle-like shape (Fig. 9B), and a cup-like shape (Fig. 9C). Furthermore, it is preferable that the dental polishing instruments 10, 10e, 10f, and 10g have a maximum diameter of 2 mm to 10 mm, for example, with respect to the rotational axis 6, and a height that is a length of 5 mm to 30 mm, for example, along the direction of the rotational axis 6.

### <Abrasive Grains (A)>

Dental prostheses, which are objects to be polished, are fabricated using various materials, such as a metal, a composite resin, zirconia, and resin that have different mechanical properties. For this reason, it is necessary to select the most appropriate type of abrasive grains having the most appropriate particle diameters, as the abrasive grains (A), depending on the material to be polished.

As the type of the abrasive grains (A), the most appropriate type of abrasive grains is selected each time, depending on the material to be polished. For example, preferably, one or more are selected from diamond, aluminum oxide, silicon carbide, cerium oxide, and boron nitride, although there is no limitation to a particular type.

For example, when the material to be polished is a hard ceramic such as zirconia, it is preferable to select diamond as the abrasive grains (A). By contrast, when the material to be polished is a relatively soft material, e.g., a metal or a composite resin, it is possible to achieve a sufficient polishing effect by using silicon carbide or aluminum oxide as the abrasive grains (A).

The particle diameter and the shape of the abrasive grains (A) to use are not limited to a particular size and shape so that the most appropriate particle diameter and shape can be selected depending on the required surface roughness. As some examples, the abrasive grains (A) having an average particle diameter of 30 µm to 200 µm are often used in rough polishing, and the abrasive grains (A) having an average particle diameter of 1 µm to 30 µm are often used in final-finish polishing. The particle diameter of the abrasive grains is selected based on the average particle diameter. The average particle diameter is a median diameter (d50), and can be determined using a general granularity distribution meter, for example. There are granularity distribution meters using various measurement principles, and examples thereof include a granularity distribution meter using an electric resistance.

<Binder (B)>

As the binder (B), an elastomer material, a glass-based material, a resin-based material, or the like may be used. From the viewpoint of bonding (adhesion) property of the whetstone layers and handling property at the time of separation, an elastomer material is particularly preferably used. The elastomer material to be used is not limited to a particular material, and examples thereof include a synthetic rubber or a natural rubber, e.g., acrylic rubber, silicone rubber, chlorosulfonated polyethylene, isoprene rubber, urethane rubber, chloroprene rubber, butadiene rubber, butyl rubber, ethylenepropylene rubber, and urethane rubber, all of which have rubber elasticity. Examples of the glass-based material include oxide glass, such as borosilicate glass, non-oxide glass such as chalcogenide glass, and feldspar. Examples of the resin-based material include an epoxy resin, a polyolefin resin, and polyvinyl chloride.

When an elastomer material is used as the binder (B), it is preferable to use different types of elastomer materials for the two whetstone layers that are held in contact with each other. This is because, when the whetstone layers made of the same type of elastomer materials are held in contact with each other, the adjacent whetstone layers may stick to each other when the whetstone layers are heated in the process of molding, and it becomes difficult to separate the whetstone layers from each other. In such a configuration in which the whetstone layers made of the same kind of elastomer materials are disposed adjacently to each other, the whetstone layers can be prevented from sticking to each other during the process of molding by using abrasive grains of different particle diameters or those made of different materials for the respective whetstone layers.

There is no limitation to the ratio by which the abrasive grains to be used is mixed with the binder, but the mixing ratio of the abrasive grains to the binder is preferably, for example, 90 : 10 to 30 : 70 in weight, from the viewpoint of the balance between the polishing property and the durability.

When an elastomer material or a resin-based material is used as the binder (B), it is possible to mix various compounding agents such as a colorant, a filler, and a plasticizer that are often used for elastic rubber, as appropriate, as long as the effect of the present invention is not impaired. **In** order to crosslink the elastic rubber, various vulcanizing agents and vulcanization accelerators may be added as appropriate. **In** addition, a plurality of these components may be added to the binder in combination.

A colorant, for example, is added to improve the visibility of remaining dental polishing instrument, or for the purpose of product identification. As the colorant, it is desirable to use an inorganic pigment such as natural mineral pigment or synthetic inorganic pigment. Specific examples of the colorant include titanium oxide, iron oxide, cobalt aluminate, and ultramarine.

A filler may be added for the purpose of adjusting the hardness, and reinforcing the dental polishing instrument. Specific examples of the filler include carbon black, thickened silica fine particles, titanium dioxide, diatomaceous earth, aluminum silicate, calcium carbonate, zinc oxide, and magnesium oxide. These fillers may be used solely or in combination.

When a glass-based material is used as the binder (B), it is possible to add various compounding agents, such as a colorant and a filler, that are often used for vitrified grinding wheels, as appropriate, as long as the effect of the present invention is not impaired. **In** addition, a plurality of these components may be added to the binder in combination.

A colorant, for example, is added to improve the visibility of the remaining dental polishing instrument, or for the purpose of product identification, in the same manner as described above. As the colorant, for example, metal oxides such as cobalt oxide, copper oxide, chromium oxide, nickel oxide, and manganese oxide are suitably used.

A filler is used for the purposes such as adjusting the hardness of the dental polishing instrument, and forming pores for suppressing clogging. Examples of the filler include hollow bodies made of graphite, silica stone, calcium carbonate, alumina, and glass.

### (Second Embodiment)

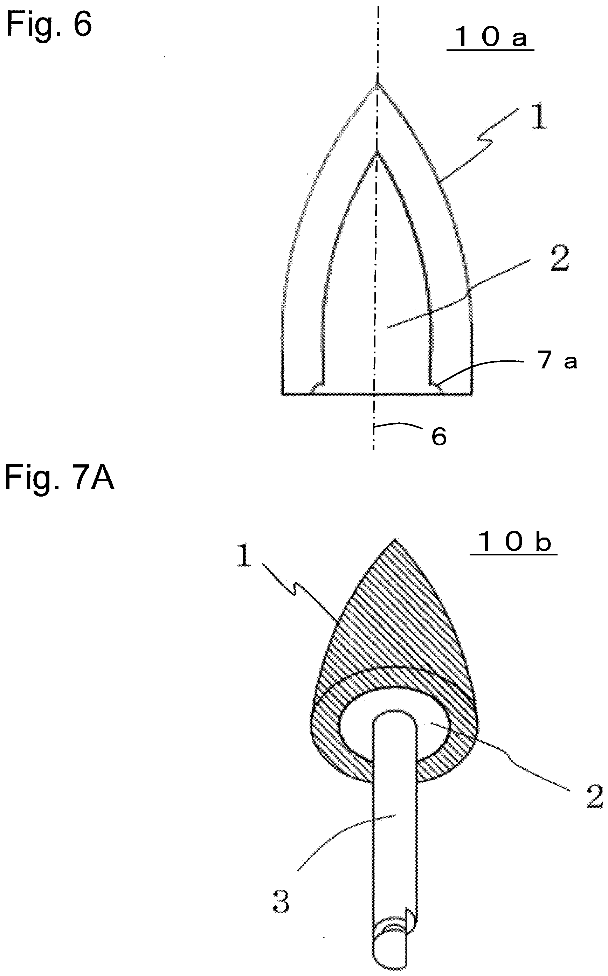

Fig. 6 is a schematic cross-sectional view of a structure including a rotational axis 6 of a dental polishing instrument 10a according to a second embodiment.

The dental polishing instrument 10a is different from the dental polishing instrument according to the first embodiment in the use of the second whetstone layer 2 provided with the protrusion 7a, as illustrated in Fig. 3.

Because the protrusions are provided to the second whetstone layer 2, the first whetstone layer 1 and the second whetstone layer 2 can be held by a physical fitting. With this, it is possible to prevent idling of the first whetstone layer 1 with respect to the second whetstone layer 2, to enhance the grip force of the first whetstone layer 1, and to suppress the likeliness of the first whetstone layer 1 falling off from the second whetstone layer 2 even during the use at a high-speed rotation.

### (Third Embodiment)

Fig. 7A is a schematic perspective view illustrating an example of a dental polishing instrument 10b having a shaft 3 integrated thereto, according to a third embodiment. Fig. 7B is a schematic perspective view illustrating an example of a dental polishing instrument 10c according to a modification of the third embodiment.

As illustrated in Fig. 7A, the dental polishing instrument 10b according to the third embodiment is integrated with a shaft 3 for the attachment to a dental handpiece (not illustrated). As another alternative, the dental polishing instrument 10c according to the modification includes a shaft attachment 4 to and from which the shaft 5 can be attached and detached, as illustrated in Fig. 7B. The method for fixing the shaft 3 to the dental polishing instrument 10b is not particularly specified, but some examples that use a dental polishing instrument having stacked two layers will now be explained. Firstly, as for the dental polishing instrument 10b according to the third embodiment, there is a method for inserting the shaft 3 into the central portion of the second whetstone layer 2 from the bottom surface thereof, and fixing the second whetstone layer 2 by pressure bonding or using an adhesive or the like, in advance. Secondly, a structure with a detachable shaft 5, as in the dental polishing instrument 10c according to the modification, can be achieved by providing a shaft attachment 4 having a hole with a similar shape to the shape of the shaft 5 to be inserted, at the center of the bottom surface of the second whetstone layer 2, so that the shaft 5 can be attached or detached thereto or therefrom, as appropriate, at the time of use.

### <Method of Manufacturing Dental polishing instrument>

The method of manufacturing a dental polishing instrument according to the present invention is not limited to any particular method, but in the explanation herein, an example of using an elastomer material as the binders (B) of the first whetstone layer and the second whetstone layer will be described, as an example of an abrasive including stacked the two layers.
(1) To begin with, the second whetstone layer with a predetermined shape is formed. The abrasive grains (A) and other compounding agents are added to an elastomer material, and kneaded with a mixer, such as a kneader or a kneading roll, to prepare a kneaded material. The kneaded material is then compression-molded into a predetermined shape using a hot press. At this time, by molding the kneaded material integrally with a shaft for attaching a rotary tool, such as a handpiece, it is possible to fabricate a dental polishing instrument with an integrated shaft. In addition, it is also possible to process the surface of the second whetstone layer so as to provide roughness, a slit pattern, or the like so that the surface physically becomes caught on with the first whetstone layer. Conditions under which the material is molded are determined depending on the elastomer material to be used.
(2) Also for the first whetstone layer, a kneaded material including the elastomer material, the abrasive grains (A), and other compounding agents is prepared by following the same manufacturing method as that for the second whetstone layer. The kneaded material forming the first whetstone layer is then compression-molded into a predetermined shape, using a hot press. At that time, by compression-molding the second whetstone layer in a manner covered by the kneaded material of the first whetstone layer so as to bring the first whetstone layer and the second whetstone layer into close contact with each other, the dental polishing instrument according to the first to the third embodiments can be fabricated.

Note that a separation agent may be applied to the surface of the second whetstone layer, as necessary, before the surface of the second whetstone layer is covered with the kneaded material of the first whetstone layer. It is also possible to manufacture a dental polishing instrument having three or more whetstone layers by repeating the steps described above.

As another example, when a glass material is used as the binder of the first whetstone layer, and an elastomer material is used as the binder of the second whetstone layer, the first whetstone layer is fabricated, to begin with. The kneaded material for forming the second whetstone layer is then compression-molded inside the first whetstone layer, whereby bringing the first whetstone layer and the second whetstone layer into close contact with each other. In this manner, the dental polishing instrument according to the first to the third embodiments can be fabricated. When the whetstone layer is fabricated with a glass-based material, it is possible to form a predetermined whetstone layer by preparing a kneaded material including the glass-based material, the abrasive grains (A), and other compounding agents, compression-molding the kneaded material into a predetermined shape as primarily molding, and then baking the kneaded material at a high temperature of about 600 °C to 1500 °C, to sinter the glass-based material. The baking temperature and baking time are determined depending on the glass-based material to be used.

### [Examples]

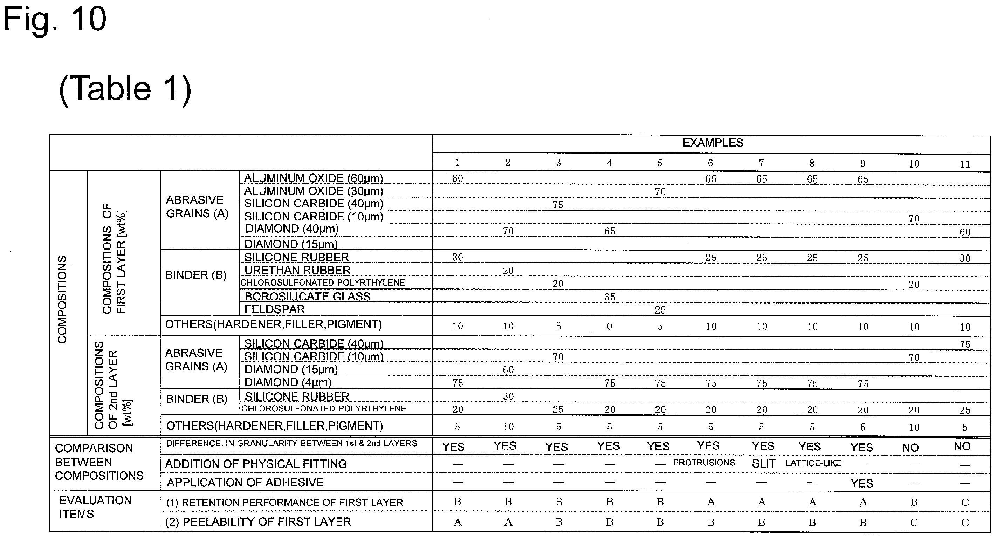

Some examples and comparative examples will be specifically described below, given that the present invention is not limited to these examples. In these examples, compositions of the dental polishing instrument for polishing a dental composite resin were used. Table 1 in Fig. 10 indicates the compositions of compounds for the first whetstone layer and the second whetstone layer. By combining and kneading these compounds, kneaded materials to be used for molding the respective whetstone layers were obtained. The kneaded materials using an elastomer material as the binder were then subjected to compression molding, and the kneaded materials using a glass-based binder were compression-molded and sintered, to obtain the respective dental polishing instruments.

### <Fabrication of Dental Polishing Instrument (Second Whetstone layer)>

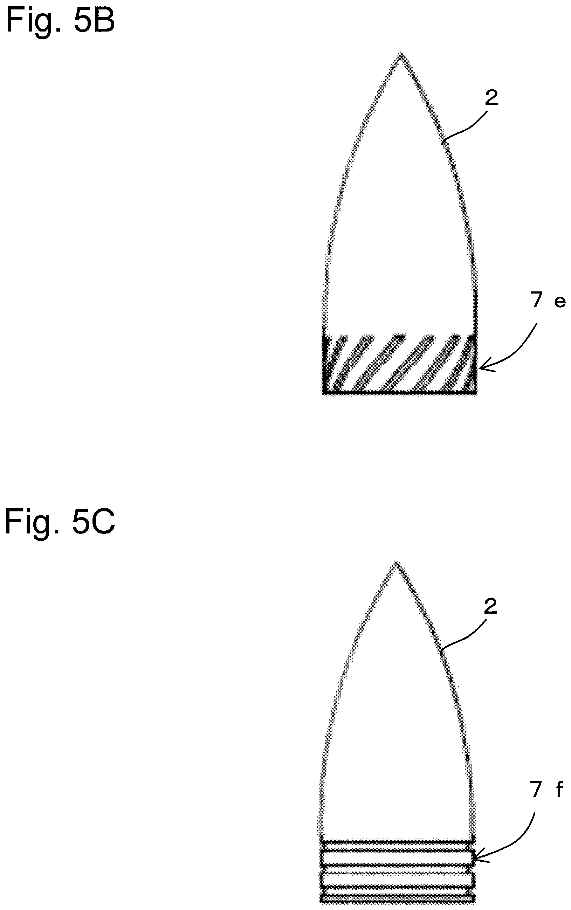

A kneaded material was at first prepared by adding abrasive grains (A) and other compounding agents to an elastomer material, and kneading the material with a mixer such as a kneading roll, until the mixture became uniform. The resultant kneaded material was compression-molded into a predetermined shape with a hot press. At that time, the kneaded material was molded with a shaft, so that the shaft was integrated with the molding. Conditions under which the material was molded were determined depending on the elastomer material used. The elastomer materials and the molding conditions used in these examples will be listed below. In these examples, compression-molded samples having a bullet-like shape with a size of φ 5 × 8 mm were used. As other examples, the second whetstone layer having protrusions 7a (Fig. 3), grid-like patterns 7b, 7c (Fig. 4A, Fig. 4B), and a slit pattern 7d, 7e, 7f (Figs. 5A, 5B, and 5C) for improving physical fitting between the first whetstone layer and the second whetstone layer on the surface were also fabricated.
- Chlorosulfonated polyethylene: the molding conditions were set to 170 °C for 7 minutes.
- Silicone rubber: the molding conditions were set to 120 °C for 5 minutes.

### <Fabrication of Dental polishing instrument (First Whetstone layer)>

A kneaded material was at first prepared by adding abrasive grains (A) and other compounding agents to an elastomer material, and kneading the material with a mixer such as a kneading roll, until the mixture became uniform. The resultant kneaded material was compression-molded into a predetermined shape with a hot press. At that time, the first whetstone layer was molded in a manner covering the second whetstone layer, to obtain a dental polishing instrument having the first whetstone layer and the second whetstone layer held in close contact with each other. Conditions under which the material was molded were determined depending on the elastomer material used.

As another example, the first whetstone layer was molded after a vinyl acetate-based adhesive was applied to the second whetstone layer in advance, to improve the adhesion between the first whetstone layer and the second whetstone layer. The elastomer materials and the molding conditions used in these examples will be listed below. Used in these examples were compression-molded samples having a bullet-like shape with a size of φ 7 × 11 mm.
- Chlorosulfonated polyethylene: the molding conditions were set to 170 °C for 7 minutes.
- Silicone rubber: the molding conditions were set to 120 °C for 5 minutes.
- Urethane rubber: the molding conditions were set to 170 °C for 7 minutes.

### (Modification)

Other examples of the whetstone layers using a glass-based material for the first whetstone layer and using an elastomer material for the second whetstone layer are described below.

### <Fabrication of Dental polishing instrument (First Whetstone layer)>

A kneaded material was at first prepared by adding the abrasive grains (A) and other compounding agents to the glass-based material, and kneading the material with a mixer such as a crusher until the mixture became uniform. The resultant kneaded material was compression-molded (primarily molded) into a predetermined shape with a hot press. The resultant molding was completely sintered in an electric furnace, to fabricate the first whetstone layer. The glass-based materials used in these examples, the molding conditions (primary molding) used in the hot press, and the baking conditions used in the electric furnace are listed below. The first whetstone layer was fabricated to have a bullet-like shape of φ 7 × 11 mm, and a cavity of φ 5 × 8 mm was formed so that the second whetstone layer can be molded therein.
- Borosilicate glass: the molding conditions were set to 170 °C for 10 minutes, and the baking conditions were set to 700 °C for 2 hours.
- Feldspar: the molding conditions were set to 170 °C for 10 minutes, and the baking conditions were set to 1300 °C for 5 hours.

### <Fabrication of Dental polishing instrument (Second Whetstone layer)>

A kneaded material was at first prepared by adding abrasive grains (A) and other compounding agents to an elastomer material, and kneading the material with a mixer such as a kneading roll, until the mixture became uniform. The resultant kneaded material was filled in the first whetstone layer, and compression-molded with a hot press in such a manner that the second whetstone layer surface was brought into close contact with the first whetstone layer. At that time, a holder hole to and from which a separate shaft can be attached and detached was formed on the bottom surface of the second whetstone layer. Conditions under which the material was molded were determined depending on the elastomer material used. The elastomer material (B) and the molding conditions used in these examples are listed below.
- Silicone rubber: the molding conditions were set to 120 °C for 5 minutes.

### <Fabrication of Test Piece>

A test piece was fabricated following the procedure described below. To begin with, a stainless steel ring having an inner diameter of 15 mm and a thickness of 2 mm was placed on a glass slide, and a dental composite resin (Beautyfil II, SHOFU INC.) was filled inside the ring and polymerized using a conventional method, to obtain a cylindrical test piece.

The fabricated dental polishing instruments were then evaluated using the following method. Table 1 in Fig. 10 indicates the evaluation results.

### <Retention Performance of First Whetstone layer>

The fabricated sample was polished at 3N, at a rotation speed of 15,000 rotations/min, for 10 seconds. The retention performance of the first whetstone layer was then evaluated on the basis of the following evaluation criteria A to D.

For A, even when polishing was repeated twice or more, the first whetstone layer did not fall off during the polishing, and no looseness of the first whetstone layer was confirmed after the polishing. For B, the first whetstone layer did not fall off from the second whetstone layer during the first run of polishing, and no looseness of the first whetstone layer was confirmed even after the polishing. For C, the first whetstone layer did not fall off from the second whetstone layer during the first run of polishing, but looseness of the first whetstone layer was confirmed after the polishing. In the case of D, the first whetstone layer fell off from the second whetstone layer during the first run of polishing, and the whetstone layer could not withstand the use. In this test, the samples with the evaluations C or higher were regarded as pass.
A: The first whetstone layer did not fall off even when the first whetstone layer was polished twice or more, and the first whetstone layer did not become loose after the polishing
B: The first whetstone layer did not fall off during the first run of polishing, and the first whetstone layer did not become loose after the polishing
C: The first whetstone layer did not fall off during the first run of polishing, but the first whetstone layer became loose after the polishing
D: The first whetstone layer fell off during the first run of polishing

### <Peelability of first whetstone layer>

For the fabricated samples, the peelability of the first whetstone layer at the time when the first whetstone layer was removed from the second whetstone layer was evaluated based on the following evaluation criteria A to D.

For A, the first whetstone layer was removed easily, and no fracture such as chipping was observed in the second whetstone layer. For B, no fracture such as chipping was observed in the second whetstone layer after the first whetstone layer was removed. For C, the second whetstone layer was still usable after the first whetstone layer was removed, but the second whetstone layer had some chipped part or the like. For D, the second whetstone layer was clearly broken, and unusable after the first whetstone layer was removed. In this test, the samples with the evaluations C or higher were regarded as pass.
A: The first whetstone layer was easily removed, and the second whetstone layer was not broken
B: The first whetstone layer was removable, and the second whetstone layer was not broken
C: The first whetstone layer was removable but has a sense of resistance, or the second whetstone layer had some chipped parts after the first whetstone layer was removed
D: The first whetstone layer was not removable, or the second whetstone layer was clearly broken after the first whetstone layer was removed

The dental polishing instruments according to Examples 1 to 9 passed all of these the evaluation items, and excellent results were achieved. In particular, Examples 1 and 2 achieved excellent peelability, with the use of highly flexible silicone rubber as the binder (B) in the first whetstone layer. In addition, Examples 6 to 9 exhibited good retention performance with the addition of the physical fitting or the application of the adhesive. Therefore, the first whetstone layer neither fell off nor there was observation of looseness after the polishing was repeated twice or more. Example 10 had no problem in use, but was inferior to Examples 1 to 9 in that: the first whetstone layer and the second whetstone layer did not exhibit any difference in the granularity of the abrasive grains; and, when the first whetstone layer was peeled off from the second whetstone layer, the first whetstone layer was removable but there was a sense of resistance, and the part put into use was chipped after the first grinder was removed. Example 11 had no problem in use, but failed to achieve the intended polishing performance, as the abrasive grains of the first whetstone layer was less granular than the second whetstone layer, and looseness of the first whetstone layer was observed during the polishing operation with the first whetstone layer. Example 11 was also inferior to Examples 1 to 9 in that there was a sense of resistance when the first whetstone layer was peeled off, so there was some difficulty in removing the first whetstone layer.

The dental polishing instrument according to the present invention can be applied as a dental polishing instrument for polishing a dental prosthetics such as those made of a ceramic, a metal, or a composite resin.

### EXPLANATIONS OF LETTERS OR NUMERALS

1 First whetstone layer
2 Second whetstone layer
11 Abrasive grains of the first whetstone layer
12 Binder of the first whetstone layer
21 Abrasive grains of the second whetstone layer
22 Binder of the second whetstone layer
3 shaft
4 shaft attachment
5 shaft
6 rotational axis
7a protrusion
7b, 7c lattice-like patterns
7d, 7e, 7f slit patterns
8 separation agent layer
10, 10a, 10b, 10c, 10d, 10e, 10f, 10g dental polishing instrument

## Claims

1. A dental polishing instrument comprising:
a first whetstone layer (1); and
a second whetstone layer (2),
wherein the first whetstone layer (1) and the second whetstone layer (2) are stacked and held together by a physical fitting or an adhesive layer disposed between the first whetstone layer (1) and the second whetstone layer (2), while the whetstone layers (1, 2) are manually separable from each other, and
each of the whetstone layers (1, 2) includes abrasive grains (A) and a binder (B), an average particle diameter of the abrasive grains (A) of the first whetstone layer (1) is larger than an average particle diameter of the abrasive grains (A) of the second whetstone layer (2).

2. The dental polishing instrument according to claim 1, wherein the binder (B) of at least one whetstone layer of the whetstone layers (1, 2) includes an elastomer material.

3. The dental polishing instrument according to claim 1 or claim 2, wherein the dental polishing instrument has a rotational axis (6), and
the whetstone layers (1, 2) are stacked along an outer circumference from a center of the rotational axis (6).

4. The dental polishing instrument according to claim 3, wherein the abrasive grains (A) of the whetstone layer that is an outer one of the whetstone layers (1, 2) have a larger average particle diameter than an average particle diameter of the abrasive grains (A) of the whetstone layer that is an inner one of the whetstone layers (1, 2).

5. The dental polishing instrument according to any one of claims 1 to 4, wherein two adjacent whetstone layers, among the whetstone layers (1, 2), are held together, with a separation agent layer (8) disposed between the two adjacent whetstone layers (1, 2).

6. The dental polishing instrument according to any one of claims 1 to 5, wherein the first whetstone layer (1) covers the second whetstone layer (2).

## Patentansprüche

1. Zahnpoliergerät, umfassend:
eine erste Schleifsteinschicht (1); und
eine zweite Schleifsteinschicht (2),
wobei die erste Schleifsteinschicht (1) und die zweite Schleifsteinschicht (2) übereinander angeordnet und durch eine mechanische Passung oder eine zwischen der ersten Schleifsteinschicht (1) und der zweiten Schleifsteinschicht (2) angeordnete adhäsive Schicht zusammengehalten werden, während die Schleifsteinschichten (1,2) manuell voneinander trennbar sind, und
jede der Schleifsteinschichten (1,2) Schleifkörner (A) und ein Bindemittel (B) umfasst, wobei ein durchschnittlicher Partikeldurchmesser der Schleifkörner (A) der ersten Schleifsteinschicht (1) größer ist als ein durchschnittlicher Partikeldurchmesser der Schleifkörner (A) der zweiten Schleifsteinschicht (2).

2. Zahnpoliergerät gemäß Anspruch 1, wobei das Bindemittel (B) zumindest einer Schleifsteinschicht der Schleifsteinschichten (1, 2) ein Elastomer-Material umfasst.

3. Zahnpoliergerät gemäß Anspruch 1 oder Anspruch 2, wobei das Zahnpoliergerät eine Rotationsachse (6) aufweist, und
die Schleifsteinschichten (1, 2) entlang eines äußeren Umfanges übereinander von einem Zentrum der Rotationsachse (6) angeordnet sind.

4. Zahnpoliergerät gemäß Anspruch 3, wobei die Schleifkörner (A) der Schleifsteinschicht, die eine äußere der Schleifsteinschichten (1, 2) ist, einen größeren durchschnittlichen Partikeldurchmesser aufweisen als ein durchschnittlicher Partikeldurchmesser der Schleifkörner (A) der Schleifsteinschicht, die eine innere der Schleifsteinschichten (1, 2) ist.

5. Zahnpoliergerät gemäß einem der Ansprüche 1 bis 4, wobei zwei benachbarte Schleifsteinschichten, unter den Schleifsteinschichten (1,2), zusammengehalten werden, wobei eine Trennmittelschicht (8) zwischen den zwei benachbarten Schleifsteinschichten (1,2) angeordnet ist.

6. Zahnpoliergerät gemäß einem der Ansprüche 1 bis 5, wobei die erste Schleifsteinschicht (1) die zweite Schleifsteinschicht (2) bedeckt.

## Revendications

1. Instrument de polissage dentaire comprenant :
une première couche de pierre abrasive (1) ; et
une deuxième couche de pierre abrasive (2),
la première couche de pierre abrasive (1) et la deuxième couche de pierre abrasive (2) étant empilées et maintenues ensemble par une attache physique ou par une couche adhésive disposée entre la première couche de pierre abrasive (1) et la deuxième couche de pierre abrasive (2), tandis que les couches de pierre abrasive (1, 2) peuvent être séparées manuellement l'une de l'autre, et
chacune des couches de pierre abrasive (1, 2) comprenant des grains abrasifs (A) et un liant (B), un diamètre moyen des particules des grains abrasifs (A) de la première couche de pierre abrasive (1) étant supérieur à un diamètre moyen des particules des grains abrasifs (A) de la deuxième couche de pierre abrasive (2).

2. Instrument de polissage dentaire selon la revendication 1, le liant (B) d'au moins une couche de pierre abrasive (1, 2) comprenant un matériau élastomère.

3. Instrument de polissage dentaire selon la revendication 1 ou la revendication 2, l'instrument de polissage dentaire ayant un axe de rotation (6), et
les couches de pierre abrasive (1, 2) étant empilées le long d'une circonférence extérieure à partir d'un centre de l'axe de rotation (6).

4. Instrument de polissage dentaire selon la revendication 3, les grains abrasifs (A) de la couche de pierre abrasive qui est une couche extérieure parmi les couches de pierre abrasive (1, 2) ayant un diamètre moyen des particules supérieur à un diamètre moyen des particules des grains abrasifs (A) de la couche de pierre abrasive qui est une couche intérieure parmi les couches de pierre abrasive (1, 2).

5. Instrument de polissage dentaire selon l'une quelconque des revendications 1 à 4, deux couches de pierre abrasive adjacentes, parmi les couches de pierre abrasive (1, 2), étant maintenues ensemble, avec une couche d'agent de séparation (8) disposée entre les deux couches de pierre abrasives (1, 2) adjacentes.

6. Instrument de polissage dentaire selon l'une quelconque des revendications 1 à 5, la première couche de pierre abrasive (1) recouvrant la deuxième couche de pierre abrasive (2).
